# EUROPÄISCHE PATENTSCHRIFT

(11) **EP 1 425 496 B1**
(45) Veröffentlichungstag und Bekanntmachung des Hinweises auf die Patenterteilung: **09.05.2007**
(21) Anmeldenummer: 02777072.6
(22) Anmeldetag: 12.09.2002
(51) Int. Cl.: F01K 13/02, G05B 13/00

(54) **VERFAHREN ZUM OPTIMIEREN EINER GROSSTECHNISCHEN ANLAGE, INSBESONDERE EINES KRAFTWERKS**
METHOD FOR OPTIMIZING A LARGE-SCALE INDUSTRIAL FACILITY, ESPECIALLY A POWER PLANT
PROCEDE D'OPTIMISATION D'UNE INSTALLATION D'ECHELLE INDUSTRIELLE, NOTAMMENT D'UNE CENTRALE ELECTRIQUE

(30) Priorität: 12.09.2001 DE 10144813
(43) Veröffentlichungstag der Anmeldung: 09.06.2004
(73) Patentinhaber: Alstom Technology Ltd, 5400 Baden (CH)
(72) Erfinder: SCHÜLE, Volker, 69181 Leimen (DE); GIETZ, Manfred, 70619 Stuttgart (DE); KITZMANN, Ewald, 69469 Weinheim (DE); BIRD, Alan, Stoke-on-Trent, ST4 8EA (GB)
(74) Vertreter: Hellwig, Tillmann Johannes
(86) Internationale Anmeldenummer: PCT/EP2002/010223
(87) Internationale Veröffentlichungsnummer: WO 2003/023195

(56) Entgegenhaltungen:
- DE-A- 19 748 315
- DE-C- 19 918 332

## Beschreibung

Die Erfindung betrifft ein Verfahren zum Optimieren einer großtechnischen Anlage, insbesondere eines Kraftwerks sowie eine nach dem erfindungsgemäßen Verfahren optimierte großtechnische Anlage, bzw. Kraftwerk.

Großtechnische Anlagen bestehen aus verschiedenen Baugruppen, die teilweise in Serie, teilweise parallel zueinander angeordnet sind und in verschiedenen Umwandlungsschritten aus den Ausgangsstoffen das gewünschte Endprodukt herstellen.

Um den Betrieb einer solchen großtechnischen Anlage zu optimieren, ist es nicht ausreichend, bzw. nicht effizient, jede einzelne Baugruppe für sich zu optimieren, da mit großer Wahrscheinlichkeit auf diesem Weg ein Gesamtoptimum der großtechnischen Anlage nicht erreicht wird. Selbst wenn auf diesem Weg das Gesamtoptimum der großtechnischen Anlage erreicht werden sollte, ist diese Vorgehensweise in der Regel mit einem hohen Einsatz technischer und finanzieller Ressourcen bei der Optimierung verbunden.

Aus der DE 199 18 332 C 1 ist ein Verfahren zur Kontrolle der im Betrieb einer Anlage entstehenden Kosten bekannt. Bei diesem Verfahren werden die Zustandsmeldungen von Komponente eines Kraftwerkseinem Rechenmodell des Kraftwerks zugeführt. In diesem Rechenmodell werden Ist-Werte der Kosten mit SollWerten der Kosten verglichen und auftretende Abweichungen werden angezeigt.

Der Erfindung liegt die Aufgabe zugrunde, ein Verfahren bereitzustellen, welches geeignet ist verschiedenste großtechnische Anlagen, bzw. Kraftwerke, so zu optimieren, dass mit dem geringsten Einsatz an technischen und ökonomischen Ressourcen eine maximale Verbesserung des Betriebsverhaltens der großtechnischen Anlage erreicht wird.

Diese Aufgabe wird anspruchsgemäß gelöst.

Durch dieses Verfahren wird auf einfache Weise sichergestellt, dass nur diejenigen Baugruppen optimiert werden, die ein nennenswertes Optimierungspotential aufweisen. Baugruppen, deren Kenngrößen gleich oder besser als die vorgegebenen Referenzwerte sind, werden bei der Optimierung nicht berücksichtigt, da eine Optimierung dieser Baugruppen trotz eines erheblichen Aufwands allenfalls einen geringen Zugewinn an Effizienz der großtechnischen Anlage bringt.

Durch den erfindungsgemäßen systematischen Ansatz zum Optimieren einer großtechnischen Anlage ist außerdem gewährleistet, dass jede großtechnische Anlage, die nach dem erfindungsgemäßen Verfahren optimiert wird, ein gutes bis sehr gutes Betriebsverhalten aufweist. Das erfindungsgemäße Verfahren bietet auch die Möglichkeit die Optimierung auf einige, wenige Baugruppen zu beschränken, so dass mit geringstem Ressourceneinsatz bereits erhebliche Verbesserungen des Betriebsverhaltens der großtechnischen Anlage realisiert werden können.

Bei einer weiteren Ausgestaltung der Erfindung kann dieses Verfahren auch mehrfach angewandt werden, so dass eine zunehmende Untergliederung und damit detailliertere Betrachtung der Unterbaugruppen erfolgt. Durch dieses Verfahren ist sichergestellt, dass wirklich nur diejenigen Unterbaugruppen eingehend analysiert und optimiert werden, die ein erhebliches Verbesserungspotential aufweisen.

Bei verschiedenen weiteren Ausgestaltungen des erfindungsgemäßen Verfahrens können die vorgegebenen Referenzwerte technischer Natur sein und insbesondere Wirkungsgrade, Emissionen, Leistungen, Zuverlässigkeit, Wartungsbedarf und Restlebensdauern umfassen.

Alternativ können bei einer weiteren Ausgestaltung des erfindungsgemäßen Verfahrens die vorgegebenen Referenzwerte ökonomischer Natur sein und insbesondere Kosten und Erlöse, die sich aus dem Betrieb der großtechnischen Anlage, bzw. des Kraftwerks, ergeben, einschließen.

Um mit möglichst geringem Aufwand eine maximale Verbesserung des Betriebsverhaltens der großtechnischen Anlage zu erreichen wird in weiterer Ergänzung des Verfahrens vorgeschlagen, dass die Baugruppen deren Kenngrößen schlechter als die Referenzwerte sind, in der Reihenfolge der Abweichung von Kenngröße zu Referenzwert hinsichtlich technischer Verbesserungspotentiale untersucht und optimiert werden. Dadurch ist gewährleistet, dass die Baugruppen, bzw. Unterbaugruppen mit dem größten Verbesserungspotential zuerst optimiert werden.

Alternativ ist es auch möglich, dass die Baugruppen, deren Kenngrößen schlechter als die Referenzwerte sind, hinsichtlich technischer Verbesserungspotentiale in der Reihenfolge untersucht und optimiert werden, dass die Baugruppe bei der das Verhältnis zwischen Nutzen und Aufwand am günstigsten ist zuerst optimiert wird. Anschließend werden die weiteren Baugruppen optimiert.

Es ist bei einer anderen Ausgestaltung des erfindungsgemäßen Verfahrens auch möglich, dass die Baugruppen, deren Kenngrößen schlechter als die Referenzwerte sind, hinsichtlich technischer Verbesserungspotentiale in der Reihenfolge untersucht und optimiert werden, dass die Baugruppe bei der das einzusetzende Kapital am kleinsten ist zuerst optimiert wird. Dieses Verfahren bietet sich insbesondere dann an, wenn nur beschränkte Mittel zur Optimierung der großtechnischen Anlage bzw. des. Kraftwerks vorhanden sind.

In weiterer Ergänzung des erfindungsgemäßen Verfahrens wird dieses auf ein Kraftwerk, insbesondere ein Dampfkraftwerk angewandt, wobei das Dampfkraftwerk mindestens einen Kessel, mindestens eine Dampfturbine, mindestens einen Kondensator, mindestens eine Kesselspeisewasserpumpe, mindestens einen Generator und mindestens eine Rauchgasreinigung aufweist.

Aufgrund der hohen thermischen Leistungen, die in Dampfkraftwerken umgesetzt werden, führen schon kleine Verbesserungen des Betriebsverhaltens des Dampfkraftwerks zu erheblichen Verringerungen der Umweltbelastungen und zu erheblichen Einsparungen beim Brennstoffverbrauch und in Folge dessen auch bei den Betriebskosten. Deshalb sind Kraftwerke, insbesondere Dampfkraftwerke, besonders für die Durchführung des erfindungsgemäßen Verfahrens geeignet.

In weiterer Ergänzung des erfindungsgemäßen Verfahrens, weist der Kessel mindestens folgende Unterbaugruppen auf: Brennstoffzufuhr, Luftzufuhr mit Gebläse, Luftvorwärmer, Hochdruckdampfkessel und/oder Überhitzer.

Weitere Unterbaugruppen der Dampfturbine sind Hochdruckteil, Zwischenüberhitzer und/oder Niederdruckteil.

Der Kondensator weist die Unterbaugruppen Kondensator, Niederdruckvorwärmer und/oder Hochdruckvorwärmer auf.

Der Generator weist mindestens die Unterbaugruppen 3-phasiger Wechselstromgenerator und Gleichstromerregermaschine auf.

Die Rauchgasreinigung besteht aus den Unterbaugruppen Rauchgasentstauber, Rauchgasgebläse und/oder Ascheabzug.

Es hat sich vorteilhaft erwiesen die oben.genannten Baugruppen des Dampfkraftwerks in die beanspruchten Unterbaugruppen aufzuteilen, da mit dieser Aufteilung gewährleistet ist, dass in sich weitgehend geschlossene technische Subsystemen optimiert werden, so dass die Wechselwirkungen mit anderen technischen Subsystemen nicht größer als notwendig sind und somit die Komplexität der Optimierungsaufgabe minimiert wird.

Die eingangs genannte Aufgabe wird ebenfalls gelöst durch ein Computerverfahren zur Durchführung eines der erfindungsgemäßen Verfahrens, wobei das Computerprogramm auf einem Speichermedium speicherbar ist.

Die eingangs genannte Aufgabe wird gleichfalls gelöst durch eine großtechnische Anlage, insbesondere Kraftwerk, wobei die Anlage, bzw. das Kraftwerk nach einem der in den Ansprüchen 1 bis 16 beanspruchten Verfahren optimiert worden ist.

Weitere Vorteile und vorteilhafte Ausgestaltungen der Erfindung sind in der nachfolgenden Zeichnung, deren Beschreibung und den Patentansprüchen entnehmbar.

Es zeigen:
- Figur 1: ein stark vereinfachtes Blockschaltbild eines Dampfkraftwerks;
- Figur 2: ein etwas detaillierteres Blockschaltbild eines Dampfkraftwerks;
- Figur 3: die Erlöse, welche mit dem Betrieb des Dampfkraftwerks erzielbar sind;
- Figur 4: die Kosten, welche mit dem Betrieb des Dampfkraftwerks verbunden sind in einer Übersicht, und die
- Figuren 5 bis 7: detaillierte Darstellungen von Bereichen der Kostenstruktur gemäß Figur 4.

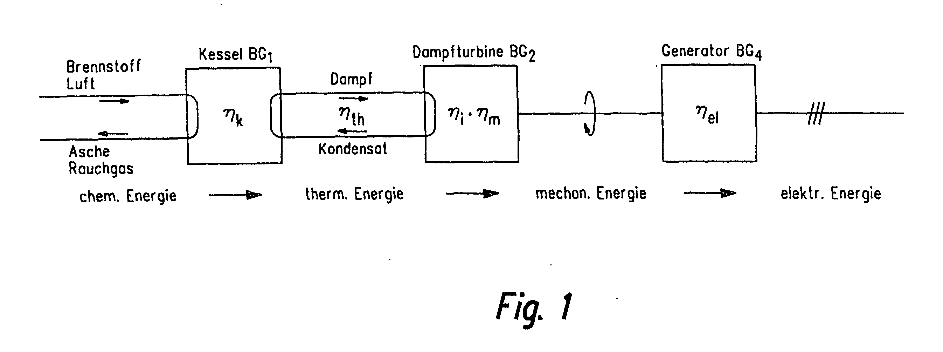

In Figur 1 ist ein stark vereinfachtes Blockschaltbild eines Dampfkraftwerks dargestellt. In einem Kessel BG₁ wird durch Verbrennen eines Brennstoffs Dampf erzeugt. Dieser Dampf wird einer Dampfturbine BG₂ zugeführt, welche die in dem Dampf enthaltene thermische Energie in mechanische Energie umwandelt. In einem Generator BG₄ wird die von der Turbine BG₂ abgegebene mechanische Energie in elektrische Energie umgewandelt. Nicht dargestellt sind in Figur 1 bspw. eine Kesselspeisewasserpumpe oder die Rauchgasreinigung.

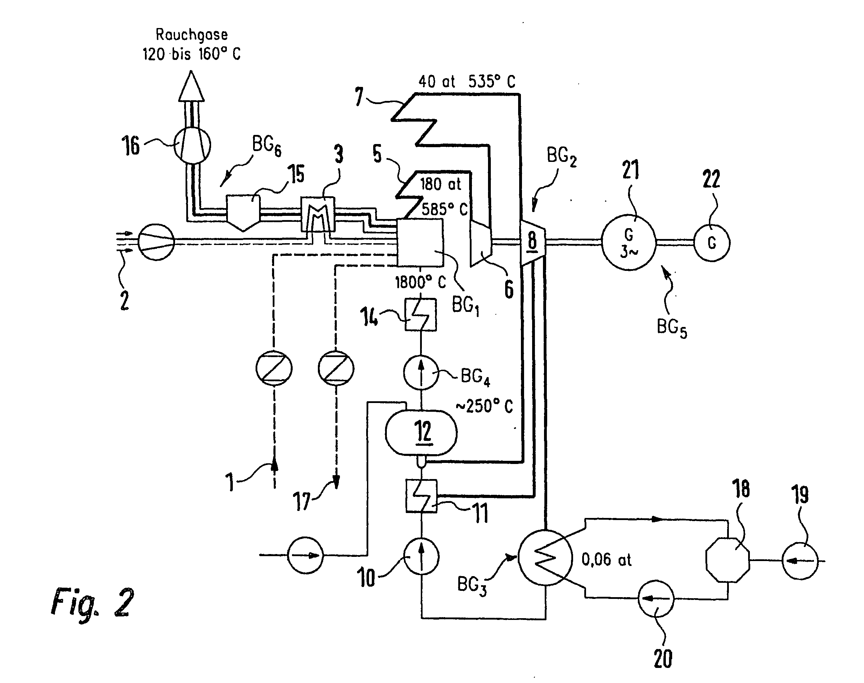

In Figur 2 ist ein etwas detaillierteres Blockschaltbild eines Dampfkraftwerks dargestellt. Das in Figur 2 dargestellte Dampfkraftwerk soll als eines von vielen möglichen Anwendungen des erfindungsgemäßen Verfahrens dienen. Durch Übertragung des anhand des Dampfkraftwerks beschriebenen Verfahrens auf andere großtechnische Anlagen sind auch andere großtechnische Anlagen in entsprechender Weise optimierbar.

In Figur 2 wird ein Kessel BG₁ über eine Brennstoffzufuhr 1 und eine Luftzufuhr 2 gefeuert. Die Verbrennungsluft wird in einem Luftvorwärmer 3 von den Rauchgasen des Kessels BG₁ vorgewärmt. Im Kessel BG₁ wird Dampf erzeugt, der anschließend einem Überhitzer 5 zugeführt wird. Dieser überhitzte Dampf wird einem Hochdruckteil 6 der Dampfturbine BG₂ zugeführt. Anschließend wird der teilweise entspannte Dampf in einem Zwischenüberhitzer 7 überhitzt und einem Niederdruckteil 8 der Dampfturbine BG₂ zugeführt. Der Abdampf der Dampfturbine BG₂ wird einem Kondensator BG₃ zugeführt und anschließend von einer Kondensatpumpe 10 in einen Niederdruckvorwärmer 11 und einen Speisewasserbehälter 12 gefördert. Aus dem Speisewasserbehälter 12 fördert die Kesselspeisepumpe BG₄ das Kondensat über einen Hochdruckvorwärmer 14 in den Kessel BG₁.

Die Rauchgase des Kessels BG₁ gelangen über den Luftvorwärmer 3, einen Rauchgasentstauber 15 und ein Rauchgasgebläse 16 in die Umwelt.

Die bei der Verbrennung anfallende Asche wird aus dem Kessel BG₁ über einen Ascheabzug 17 entfernt.

Der Kondensator BG₃ wird über einen Kühlturm 18 von einer Kühlwasserpumpe 20 mit kaltem Wasser versorgt. Um die Kühlleistung des Kühlturms 18 zu erhöhen, kann über eine Zusatzwasserpumpe 19 Wasser in den Kühlturm 18 eingebracht werden.

Der Generator BG₅ besteht aus einem 3-phasigen Generator 21 und einer Gleichstromerregermaschine 22.

Der Rauchgasentstauber 15 und das Rauchgasgebläse 16 bilden die Rauchgasreinigung BG₆.

Die in Figur 2 dargestellten Baugruppen BG₁ bis BG₆ können in folgende Untergruppen unterteilt werden:

Zum Kessel BG₁ gehören die Untergruppen Brennstoffzufuhr 1, Luftzufuhr 2 mit Gebläse, Luftvorwärmer 3, Hochdruckdampfkessel 4 und/oder Überhitzer 5.

Zur Dampfturbine BG₂ gehören die Unterbaugruppen Hochdruckteil 6, Zwischenüberhitzer 7 und/oder Niederdruckteil.

Der Baugruppe Kondensator BG₃ gehören an: Die Kühlwasserpumpe 20, der Kühlturm 18 und/oder die Zusatzwasserpumpe 19.

Der Generator BG₅ besteht aus den Unterbaugruppen 3-phasiger wechselstromgenerator 21 und Gleichstromerregermaschine 22.

Die Rauchgasreinigung BG₆ besteht aus einem Rauchgasentstauber 15 und einem Rauchgasgebläse 16.

Die zuvor beschriebene Aufteilung der Baugruppen eines Dampfkraftwerks sowie der zugehörigen Unterbaugruppen kann auch, wenn es zweckmäßig erscheint, in anderer Weise vorgenommen werden.

Die nicht explizit einer Baugruppe zugeordneten Bauteile des Dampfkraftwerks, wie bspw. der Hochdruckvorwärmer 14, der Speisewasserbehälter 12, der Niederdruckvorwärmer 11 und die Kondensatpumpe 10 können bspw. dem Kondensator BG₃ oder einer anderen Baugruppe zugeordnet werden.

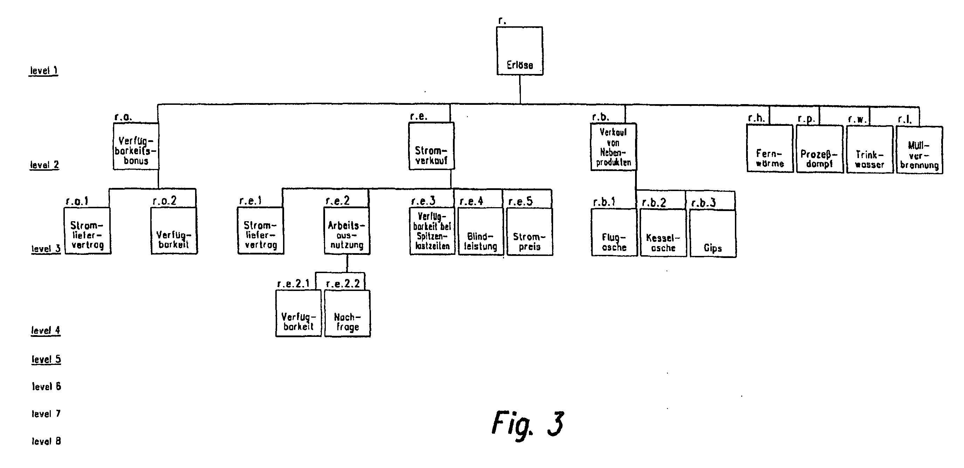

Die Gliederung eines Dampfkraftwerks kann noch sehr viel detaillierter erfolgen als dies anhand des Blockschaltbilds gemäß Figur 2 geschehen ist, vorgenommen werden. Unabhängig davon wie detailliert eine großtechnische Anlage in Baugruppen und Unter-Baugruppen unterteilt wurde, kann man jeder großtechnischen Anlage Erlöse und Kosten zuordnen. In Figur 3 ist ein Strukturdiagramm der Erlöse eine Dampfkraftwerks dargestellt. Gemäß Figur 3 kann ein Dampfkraftwerk bspw. in acht Hierarchiestufen, als level 1 bis level 8 bezeichnet, unterteilt werden. Gemäß Fig. 3 können auf den Hierarchiestufen level 1 bis 4 Erlöse erzielt werden. Die Gliederung der Erlöse gemäß Figur 3 ist selbsterklärend, da die einzelnen Erlösarten in den Kästen r.a bis r.r.2.2 von Fig. 3 eingetragen sind. Die Gliederung, bzw. die Struktur der Erlöse wird durch die Verbindungslinien zwischen den einzelnen Erlösarten angedeutet. Durch den Vergleich der in einem zu optimierenden Dampfkraftwerk erzielten Erlöse mit Referenzwerten, die beispielsweise von anderen Dampfkraftwerken stammen, können eventuelle Mängel des untersuchten Dampfkraftwerks bei den Erträgen auf einfache und zuverlässige Weise identifiziert werden. Durch die Untersuchung und technische Optimierung der Baugruppen und Unter-Baugruppen deren Erträge mangelhaft sind, kann das untersuchte Dampfkraftwerk hinsichtlich seiner Erträge verbessert werden.

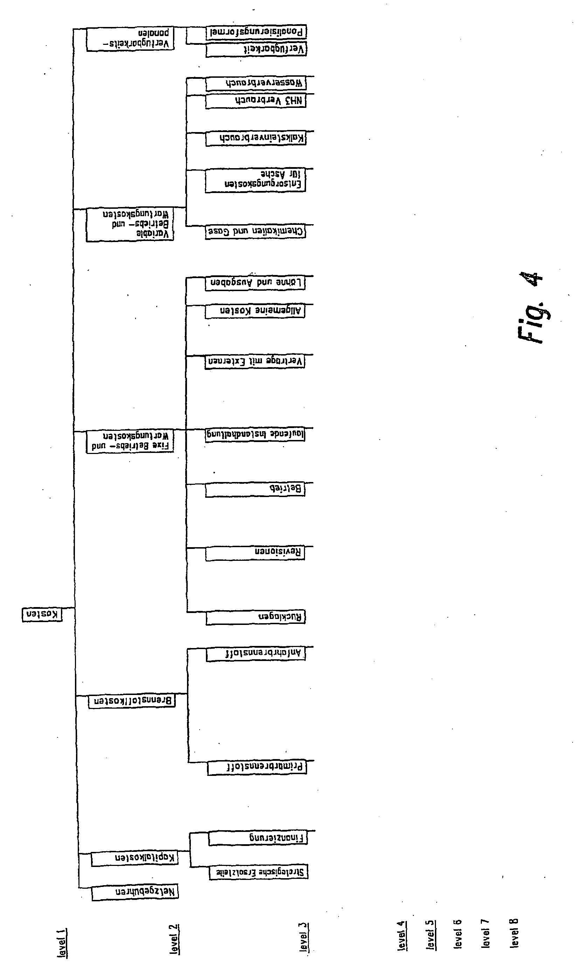

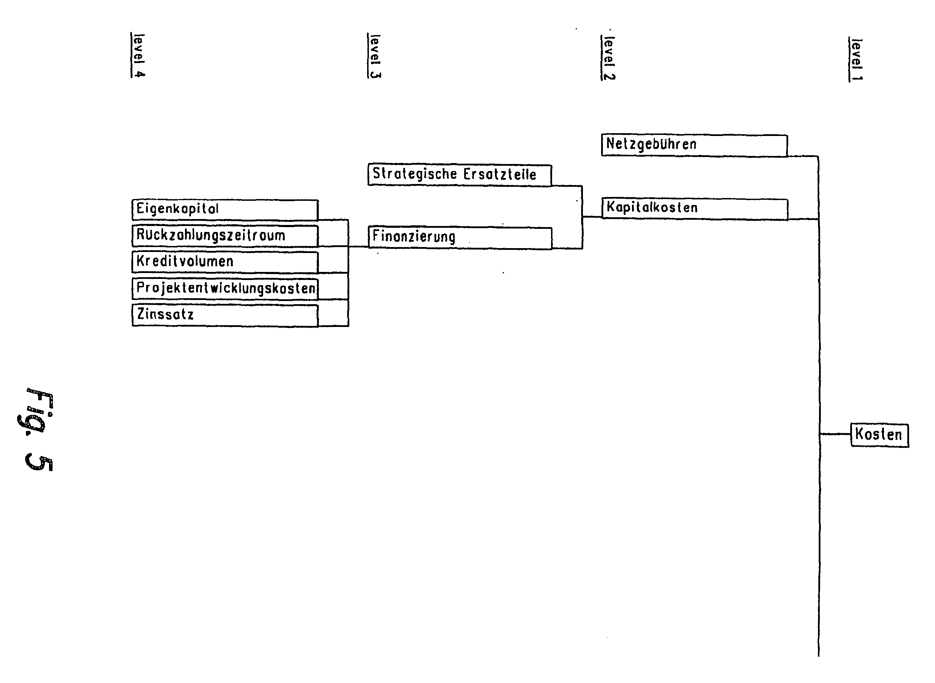

In Figur 4 sind den Erlösen aus Figur 3 die Kosten, welche beim Betrieb des Dampfkraftwerks entstehen können, gegenübergestellt. In Fig. 4 sind beispielhaft nur Kosten bis zum level 3 eingetragen. Selbstverständlich können auch noch weitere Hierarchiestufen bei Bedarf eingeführt werden (siehe z. B. Fig. 5, 6 und 7). Aus Figur 4 wird deutlich, dass die Betrachtung eines Dampfkraftwerks unter Kostengesichtspunkten in den unteren Hierarchiestufen auf eine oder mehrere Unter-Baugruppen führt, die zu den Kosten beitragen. Durch Verbesserungen der Technik einzelner Unter-Baugruppen kann das Betriebsverhalten der großtechnischen Anlage, bzw. des Dampfkraftwerks, gezielt verbessert werden.

In den Figur 5 bis 7 ist das Strukturdiagramm der Kosten gemäß Figur 4 in vier verschiedene Bereiche unterteilt und vergrößert und detaillierter dargestellt. Die beispielhafte Beschreibung einzelner Kostenblöcke aus Figur 4 erfolgt nachfolgend anhand der Figuren 5 bis 7.

Aus Figur 5 ergibt sich, dass sich die Gesamtkosten auf der Hierarchiestufe level 1 zum Teil von den Netzgebühren und den Kapitalkosten verursacht werden. In der Hierarchiestufe level 3 sind die Kapitalkosten in die Kosten für strategische Ersatzteile und die Finanzierung des Kraftwerks untergliedert. Auf dem level 4 ist die Finanzierung in Eigenkapital, Rückzahlungszeitraum, Kreditvolumen, Projektentwicklungskosten und den Zinssatz weiter untergliedert. Je nach Bedarf können die einzelnen Kostenblöcke noch weiter detailliert werden. Jeder dieser Kostenblöcke kann mit Informationen, wie bspw. einem Referenzwert oder anderem hinterlegt werden, so dass wenn die Kosten einer konkreten Anlage bekannt sind, durch den Vergleich der konkreten Kosten mit dem Referenzwert und den anderen Werten des Kostenblocks schnell und effizient festgestellt werden kann, ob die Kosten der untersuchten Anlage günstig sind oder ob sie verbessert werden können.

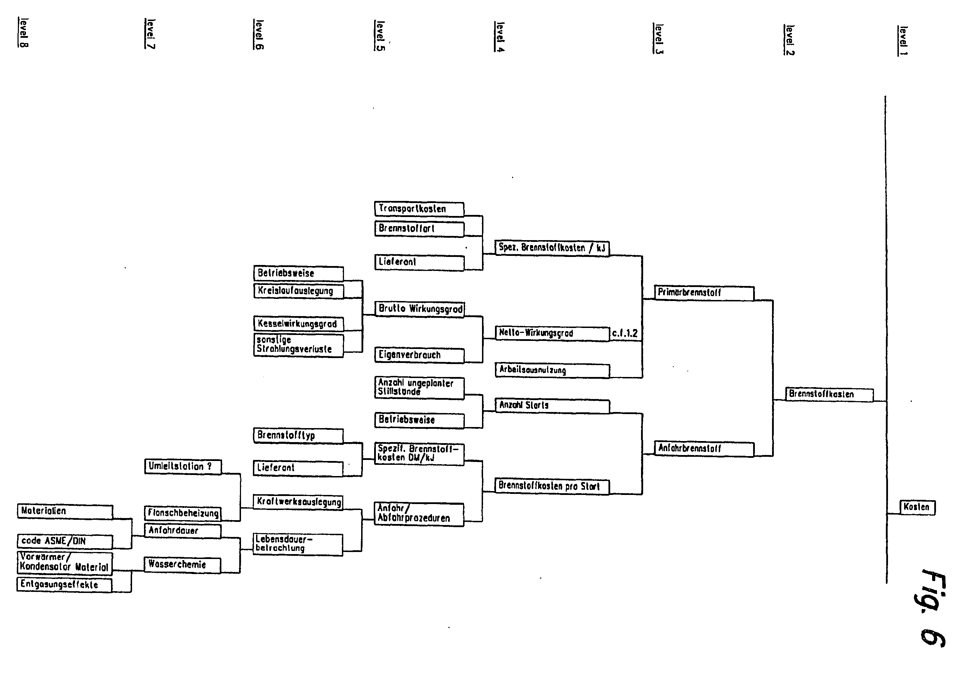

In Figur 6 sind weitere Kosten, die beim Betrieb des Dampfkraftwerks entstehen können aufgegliedert. Die Brennstoffkosten lassen sich in die Kosten für den Primärbrennstoff und den Anfahrbrennstoff untergliedern. Sowohl der Primärbrennstoff als auch der Anfahrbrennstoff können weiter untergliedert werden, wie dies aus Figur 6 ersichtlich ist. Verfolgt man die Kosten des Primärbrennstoffs weiter, so ergibt sich aus der Hierarchiestufe level 4, dass der Nettowirkungsgrad des Kraftwerks Einfluss auf die Primärbrennstoffkosten hat. Der Nettowirkungsgrad setzt sich aus dem Bruttowirkungsgrad abzüglich des Eigenverbrauchs des Dampfkraftwerks zusammen (siehe level 5).

Der Bruttowirkungsgrad wiederum hängt von der Betriebsweise, der Kreislaufauslegung, dem Kesselwirkungsgrad und den Strahlungsverlusten ab. Der Bruttowirkungsgrad wird durch das Verhältnis der vom Generator BG₅ abgegebenen elektrischen Arbeit und der über die Brennstoffzufuhr 1 zugeführte chemische Energie des Brennstoffs definiert. Referenzwerte für den Bruttowirkungsgrad eines Dampfkraftwerks liegen zwischen 30% und 45%.

Des Weiteren kann in dem Block c.f.1.2 "Nettowirkungsgrad" noch die Abhängigkeit vom Dampfmassenstrom in der Turbine, dem Dampfmassenstrom in den Zwischenüberhitzer, die Abhängigkeit von der Generatorleistung, und anderes mehr vermerkt werden. Außerdem kann auf einschlägige Literatur oder DIN-Normen verwiesen werden, so dass die mögliche Ursache für eine schlechten Nettowirkungsgrad möglichst schnell und effizient gefunden werden kann.

Der Einflussfaktor Kesselwirkungsgrad der Hierarchiestufe level 6 auf den Bruttowirkungsgrad (Hierarchiestufe level 5) kann beispielsweise durch folgende Informationen präzisiert werden: Als Referenzwerte für moderne Kessel gilt für braunkohlegefeuerte Kessel ein Wirkungsgrad von 89 bis 90%. Kessel die mit Öl oder Gas gefeuert werden, erreichen Wirkungsgrade von bis zu 95%.

Die Verluste von Kesseln nach dem Stand der Technik können wie folgt quantifiziert werden:

| | |
|---|---|
| Rauchgasverluste: | 5 bis 9% |
| Feuchtigkeitsverluste: | 4 bis 5% |
| unverbrannter Kohlenstoff in der Asche: | > 2% |
| Strahlungsverluste: | 0,2 bis 0,5% |

Die Verluste können bspw. von dem Wasserstoffgehalt des Brennstoffs, die Feuchtigkeit des Brennstoffs und der Verbrennungsluft, dem unverbrannten Kohlenstoff in der Asche und der Wärmeleitung durch Strahlung und Konvektion an der Oberfläche des Heizkessels abhängen.

Die Strahlungsverluste, welche auch in der Hierarchiestufe level 6 aufgeführt sind, und welche Auswirkungen auf den Bruttowirkungsgrad haben, können bspw. gemäß der DIN 1942 berechnet werden. Anhand der für die untersuchte Anlage berechneten Werte der Strahlungsverluste kann man durch die in der genannten DIN vorgegebenen Referenzwerte vergleichen, ob die Strahlungsverluste der zu untersuchenden Anlage klein genug sind oder, ob sie weiter verbessert werden sollten.

In entsprechender Weise gehören zu jedem Block gemäß den Figuren 5 bis 7 diejenigen Informationen, welche es ermöglichen durch den Vergleich der Werte einer zu untersuchenden Anlage mit den in den Blöcken hinterlegten Referenzwerten das Verbesserungspotential der untersuchten Anlage zu erkennen. Des Weiteren können auch Hinweise, wie Verbesserungen am zweckmäßigsten vorzunehmen sind zu jedem Block hinterlegt werden.

Geht man bis zur Hierarchiestufe level 8, so kann man erkennen, dass auch die Materialien, welche für den Bau des Kessels eingesetzt wurden, einen Einfluss auf den zum Anfahren des Kraftwerks erforderlichen Anfahrbrennstoff haben. Je nachdem welches Material verwendet wird, können sich Verbesserungen im Wirkungsgrad, der Verfügbarkeit, sowie Verringerungen der Betriebskosten und der Umweltbelastungen ergeben. Bspw. können durch den Austausch der Berohrung im Kessel und gleichzeitigem Wechsel des dazu eingesetzten Materials von CuZn28Sn1 auf Titan oder X5CrNiMo 17 12 2 die genannten Verbesserungen erreicht werden.

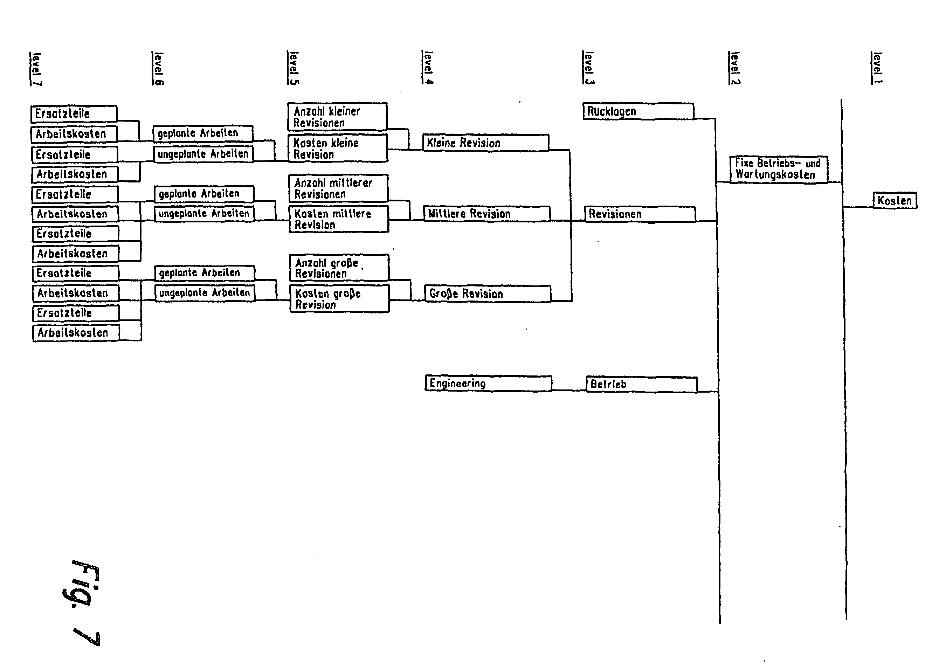

In der Figur 7 sind weitere Kosten, die sich aus den fixen Betriebs- und Wartungskosten zusammensetzen (siehe Hierarchiestufe level 2), aufgeführt. Auch zu jedem dieser Blöcke gibt es Referenzwerte, die den tatsächlich anfallenden Kosten einer bestehenden und zu untersuchenden Anlage gegenübergestellt werden können. Durch den Vergleich der tatsächlich anfallenden Kosten zu den Referenzwerten, kann ein Verbesserungspotential leicht und zuverlässig erkannt werden.

Wenn, und das gilt für alle Hierarchiestufen, der Referenzwert von dem Kennwert der untersuchten Anlage übertroffen wird, macht eine weitere Optimierung keinen Sinn, so dass auf dieser Stufe der Untergliederung und Optimierung abgebrochen werden kann. Nur wenn ein erhebliches Verbesserungspotential durch den Vergleich der Kennwerte des untersuchten Kraftwerks mit den Referenzwerten ermittelt wurde, ist es sinnvoll eine weitere Untergliederung vorzunehmen, um möglichst genau diejenige Unterbaugruppe zu identifizieren, welche für die schlechten Werte der untersuchten Anlage ursächlich ist.

Wenn eine großtechnische Anlage, wie bspw. ein Dampfkraftwerk, systematisch in der beschriebenen Art und Weise untersucht wird, ergeben sich zwangsläufig durch das immer detailliertere Untergliedern der Anlage Hinweise darauf, welche technischen Komponenten der großtechnischen Anlage schlechter als die Referenzwerte sind. Durch das gezielte Verbessern dieser Unterbaugruppen kann mit minimalem Aufwand an Ressourcen technischer und finanzieller Art ein größtmöglicher Gewinn beim Wirkungsgrad des Dampfkraftwerks, bzw. bei der Wirtschaftlichkeit der großtechnischen Anlage erreicht werden.

## Patentansprüche

1. Verfahren zum Optimieren einer großtechnischen Anlage, insbesondere eines Kraftwerks, bestehend aus *m* Baugruppen (BGⱼ), mit j = 1 (1) ... *m*), **gekennzeichnet durch** folgende Verfahrensschritte:
- Vergleichen von einer Kenngröße (KGⱼ) je Baugruppe (BG₁ bis BGⱼ) mit einem vorgegebenen Referenzwert (RWⱼ) je Baugruppe,
- Ermitteln derjenigen Baugruppen BGᵢ, mit i = 1 (1) ... *m*, deren Kenngrößen (KGᵢ) schlechter als die Referenzwerte (RWᵢ) sind,
- Optimieren der Baugruppen (BGᵢ) deren Kenngrößen (KGᵢ) schlechter als die Referenzwerte (RWᵢ) sind, wobei die Optimierung einer Baugruppe (BGᵢ) folgende Verfahrenschritte einschließt:
- Untergliedern der Baugruppe (BGᵢ) in Unter-Baugruppen (UBGₚ, mit p = 1 (1) ... *n*)
- Vergleichen von einer Kenngröße (UKGₚ) je Unter-Baugruppe (UBG₁ bis BGₚ) mit einem vorgegebenen Referenzwert (URWₚ) je Unter-Baugruppe,
- Ermitteln derjenigen Unter-Baugruppen (UBG₁, mit 1 = 1 (1) ... *n*), deren Kenngrößen (UKG₁) schlechter als die Referenzwerte (URW₁) sind, und
- Optimieren der Unter-Baugruppen (BG₁) deren Kenngrößen (KGᵢ) schlechter als die Referenzwerte (URW₁) sind.

2. Verfahren nach Anspruch 1, **dadurch gekennzeichnet, dass** die Unter-Baugruppen (UBGₚ) erforderlichenfalls ein- oder mehrfach nach dem Verfahren gemäß Anspruch 1 optimiert werden.

3. Verfahren nach einem der vorhergehenden Ansprüche, **dadurch gekennzeichnet, dass** die vorgegebenen Referenzwerte (RWᵢ, URW₁) technischer Natur sind.

4. Verfahren nach Anspruch 3, **dadurch gekennzeichnet, dass** die vorgegebenen Referenzwerte (RWᵢ, URW₁) Wirkungsgrade, Emissionen, Leistungen, Zuverlässigkeit, Wartungsbedarf und Restlebensdauern umfassen.

5. Verfahren nach einem der vorhergehenden Ansprüche, **dadurch gekennzeichnet, dass** die vorgegebenen Referenzwerte (RWᵢ, URW₁) ökonomischer Natur sind und insbesondere Kosten und Erlöse einschließen.

6. Verfahren nach einem der vorhergehenden Ansprüche, **dadurch gekennzeichnet, dass** die Baugruppen (BGᵢ, mit i = 1 (1) ... *m*), deren Kenngrößen (KGᵢ) schlechter als die Referenzwerte (RWᵢ) sind, in der Reihenfolge der Abweichung (RWᵢ - KGᵢ) hinsichtlich technischer Verbesserungspotentiale untersucht und optimiert werden.

7. Verfahren nach einem der vorhergehenden Ansprüche, **dadurch gekennzeichnet, dass** die Baugruppen (BGᵢ, mit i = 1 (1) ... *m*), deren Kenngrößen (KGᵢ) schlechter als die Referenzwerte (RWᵢ) sind, hinsichtlich technischer Verbesserungspotentiale in der Reihenfolge untersucht und optimiert werden, dass die Baugruppe (BGᵢ, mit i = 1 (1) ... *m*) bei der das Verhältnis zwischen Nutzen und Aufwand am günstigsten ist zuerst optimiert wird.

8. Verfahren nach einem der vorhergehenden Ansprüche, **dadurch gekennzeichnet, dass** die Baugruppen (BGᵢ, mit i = 1 (1) ... *m*), deren Kenngrößen (KGᵢ) schlechter als die Referenzwerte (RWᵢ) sind, hinsichtlich technischer Verbesserungspotentiale in der Reihenfolge untersucht und optimiert werden, dass die Baugruppe (BGᵢ, mit i = 1 (1) ... *m*) bei der das einzusetzende Kapital am kleinsten ist zuerst optimiert wird.

9. Verfahren nach einem der vorhergehenden Ansprüche, **dadurch gekennzeichnet, dass** das Verfahren auf ein Kraftwerk, insbesondere ein Dampfkraftwerk, angewandt wird.

10. Verfahren nach Anspruch 8, **dadurch gekennzeichnet, dass** das Kraftwerk mindestens einen Kessel (BG₁), mindestens eine Dampfturbine (BG₂), mindestens einen Kondensator (BG₃), mindestens eine Kesselspeisewasserpumpe (BG₄), mindestens einen Generator (BG₅) und mindestens eine Rauchgasreinigung (BG₆) aufweist.

11. Verfahren nach Anspruch 9 oder 10, **dadurch gekennzeichnet, dass** der Kessel (BG₁) folgende Unter-Baugruppen mindestens zum Teil aufweist:
Brennstoffzufuhr (1), Luftzufuhr (2) mit Gebläse, Luftvorwärmer (3), Hochdruckdampfkessel (4), Überhitzer (5) und/oder Ascheabzug (17).

12. Verfahren nach einem der Ansprüche 9 bis 11, **dadurch gekennzeichnet, dass** die Dampfturbine (BG₂) folgende Unter-Baugruppen aufweist: Hochdruckteil (6), Zwischenüberhitzer (7) und/oder Niederdruckteil (8).

13. Verfahren nach einem der Ansprüche 9 bis 12, **dadurch gekennzeichnet, dass** der Kondensator (BG₃) folgende Unter-Baugruppen aufweist: Kühlwasserpumpe (20), Kühlturm (18) und/oder Zusatzwasserpumpe (19).

14. Verfahren nach einem der Ansprüche 9 bis 13, **dadurch gekennzeichnet, dass** der Generator (BG₅) folgende Unter-Baugruppen aufweist: 3-phasiger Wechselstrom-Generator (21) und Gleichstrom-Erregermaschine (22).

15. Verfahren nach einem der Ansprüche 9 bis 14, **dadurch gekennzeichnet, dass** die Rauchgasreinigung (BG₆) folgende Unter-Baugruppen aufweist: Rauchgasentstauber (15), und/oder Rauchgasgebläse (16).

16. Computerprogramm, **dadurch gekennzeichnet, dass** es zur Ausführung eines Verfahrens nach einem der Ansprüche 1 bis 15 programmiert ist.

17. Computerprogramm nach Anspruch 16, **dadurch gekennzeichnet, dass** es auf einem Speichermedium speicherbar ist.

## Claims

1. Method for optimizing a large-scale industrial facility, in particular a power plant, consisting of m assemblies (BGⱼ), where j = 1 (1) ... *m*), **characterized by** the following method steps:
- comparing a parameter (KGⱼ) of each assembly (BG₁ to BGⱼ) with a predefined reference value (RWⱼ) for each assembly,
- determining those assemblies BGᵢ, where i = 1 (1) ... *m*, for which the parameters (KGᵢ) are poorer than the reference values (RWᵢ),
- optimizing the assemblies (BGᵢ) for which the parameters (KGᵢ) are poorer than the reference values (RWᵢ), wherein the optimization of an assembly (BG₁) includes the following method steps:
- subdividing the assembly (BGᵢ) into subassemblies (UBGₚ, where p = 1 (1) ... *n*),
- comparing a parameter (UKGₚ) of each subassembly (UBG₁ to BGₚ) with a predefined reference value (URWₚ) for each subassembly,
- determining those subassemblies (UBG₁, where 1 = 1 (1) ... *n*) for which the parameters (UKG₁) are poorer than the reference values (URW₁),
- optimizing the subassemblies (BG₁) for which the parameters (KGᵢ) are poorer than the reference values (URW₁).

2. Method according to claim 1, **characterized in that** the subassemblies (UBGₚ) are if necessary optimized one or more times in accordance with the method according to claim 1.

3. Method according to one of the preceding claims, **characterized in that** the predefined reference values (RWᵢ, URW₁) are of a technical nature.

4. Method according to claim 3, **characterized in that** the predefined reference values (RWᵢ, URW₁) comprise efficiencies, emissions, powers, reliability, maintenance requirement and remaining service lives.

5. Method according to one of the preceding claims, **characterized in that** the predefined reference values (RWᵢ, URWₗ) are of a financial nature and include, in particular, costs and revenues.

6. Method according to one of the preceding claims, **characterized in that** the assemblies (BGᵢ, where i = 1 (1) ... *m*) for which the parameters (KGᵢ) are poorer than the reference values (RWᵢ) are investigated and optimized in terms of their potential for technical improvement in the order of the deviation (RWᵢ - KGᵢ).

7. Method according to one of the preceding claims, **characterized in that** the assemblies (BGᵢ, where i = 1 (1) ... *m*) for which the parameters (KGᵢ) are poorer than the reference values (RWᵢ) are investigated and optimized in terms of their potential for technical improvement in an order such that the assembly (BGᵢ, where i = 1 (1) ... *m*) which has the best cost/benefit ratio is optimized first.

8. Method according to one of the preceding claims, **characterized in that** the assemblies (BGᵢ, where i = 1 (1) ... *m*) for which the parameters (KGᵢ) are poorer than the reference values (RWᵢ) are investigated and optimized in terms of their potential for technical improvement in an order such that the assembly (BGᵢ, where i = 1 (1) ... *m*) which involves the least capital outlay is optimized first.

9. Method according to one of the preceding claims, **characterized in that** the method is applied to a power plant, in particular to a steam power plant.

10. Method according to claim 8, **characterized in that** the power plant comprises at least one boiler (BG₁), at least one steam turbine (BG₂), at least one condenser (BG₃), at least one boiler feed water pump (BG₄), at least one generator (BG₅) and at least one flue gas cleaning device (BG₆).

11. Method according to claim 9 or 10, **characterized in that** the boiler (BG₁) comprises at least some of the following subassemblies: a fuel supply (1), an air supply (2) with a fan, an air preheater (3), a high-pressure steam boiler (4), a superheater (5) and/or an ash extraction device (17).

12. Method according to one of claims 9 to 11, **characterized in that** the steam turbine (BG₂) comprises the following subassemblies: a high-pressure part (6), an intermediate superheater (7) and/or a low-pressure part (8).

13. Method according to one of claims 9 to 12, **characterized in that** the condenser (BG₃) comprises the following subassemblies: a cooling water pump (20), a cooling tower (18) and/or an additional water pump (19).

14. Method according to one of claims 9 to 13, **characterized in that** the generator (BG₅) comprises the following subassemblies: a 3-phase AC generator (21) and a DC exciter (22).

15. Method according to one of claims 9 to 14, **characterized in that** the flue gas cleaning device (BG₆) comprises the following subassemblies: a flue gas dust extractor (16) and/or a flue gas fan (16).

16. Computer program, **characterized in that** it is programmed to carry out a method according to one of claims 1 to 15.

17. Computer program according to claim 16, **characterized in that** it can be stored on a storage medium.

## Revendications

1. Procédé d'optimisation d'une installation d'échelle industrielle, notamment d'une centrale électrique, se composant de *m* ensembles (BGⱼ), avec j = (1) ... *m*), **caractérisé par** les étapes de procédé suivantes :
- Comparaison d'un paramètre caractéristique (KGⱼ) pour chaque ensemble (BG₁ à BG_{J}) à une valeur de référence prescrite (RW_{J}) pour chaque ensemble,
- Détermination des ensembles BGᵢ, avec i = 1 (1) ... *m*, dont les paramètres caractéristiques (KGᵢ) sont inférieurs aux valeurs de référence (RWᵢ),
- Optimisation des ensembles (BGᵢ) dont les paramètres caractéristiques (KGᵢ) sont inférieurs aux valeurs de référence (RWᵢ), l'optimisation d'un ensemble (BGᵢ) comprenant les étapes de procédé suivantes :
- Subdivision de l'ensemble (BGᵢ) en sous-ensemble (UBGₚ, avec p = 1 (1) ... *n*)
- Comparaison d'un paramètre caractéristique (UKGₚ) pour chaque sous-ensemble (UBG₁ à BGₚ) à une valeur de référence prescrite (URWₚ) pour chaque sous-ensemble
- Détermination des sous-ensembles (UBG₁, avec 1 = 1 (1) ... *n*) dont les paramètres caractéristiques (UKG₁) sont inférieurs aux valeurs de référence (URW₁),
- Optimisation des sous-ensembles (BG₁) dont les paramètres caractéristiques (KG₁) sont inférieurs aux valeurs de référence (URW₁).

2. Procédé selon la revendication 1, **caractérisé en ce que** les sous-ensembles (UBGₚ) sont optimisés, si nécessaire, une fois ou plusieurs fois d'après le procédé selon la revendication 1.

3. Procédé selon l'une quelconque des revendications, **caractérisé en ce que** les valeurs de référence prescrites (RWᵢ, URW₁) sont de nature technique.

4. Procédé selon la revendication 3, **caractérisé en ce que** les valeurs de référence prescrites (RWᵢ, URW₁) comprennent des valeurs de rendement, d'émission, de puissance, de fiabilité, de besoin d'entretien et de durée de vie restante.

5. Procédé selon l'une quelconque des revendications, **caractérisé en ce que** les valeurs de référence prescrites (RWᵢ, URW₁) sont de nature économique et renferment notamment des coûts et des recettes.

6. Procédé selon l'une quelconque des revendications, **caractérisé en ce que** les ensembles (BGᵢ, avec i = 1 (1) ... *m*) dont les paramètres caractéristiques (KGᵢ) sont inférieurs aux valeurs de référence (RWᵢ), sont examinés et optimisés dans l'ordre de divergence (RWᵢ - KGᵢ) en ce qui concerne les potentiels d'amélioration techniques.

7. Procédé selon l'une quelconque des revendications, **caractérisé en ce que** les ensembles (BGᵢ, avec i = 1 (1) ... *m*) dont les paramètres caractéristiques (KGᵢ) sont inférieurs aux valeurs de référence (RWᵢ), sont examinés et optimisés dans l'ordre en ce qui concerne les potentiels d'amélioration techniques, **en ce que** l'ensemble (BGᵢ, avec i = 1 (1) ... *m*) pour lequel le rapport avantage/investissement est le plus favorable, est optimisé en premier lieu.

8. Procédé selon l'une quelconque des revendications, **caractérisé en ce que** les ensembles (BGᵢ, avec i = 1 (1) ... *m*) dont les paramètres caractéristiques (KGᵢ) sont inférieurs aux valeurs de référence (RWᵢ), sont examinés et optimisés dans l'ordre en ce qui concerne les potentiels d'amélioration techniques, **en ce que** l'ensemble (BGᵢ, avec i = 1 (1) ... *m*) pour lequel le capital à engager est le moins élevé, est optimisé en premier lieu.

9. Procédé selon l'une quelconque des revendications, **caractérisé en ce que** le procédé est appliqué à une centrale électrique, notamment une centrale thermique à vapeur.

10. Procédé selon la revendication 8, **caractérisé en ce que** la centrale électrique présente au moins une chaudière (BG₁), au moins une turbine à vapeur (BG₂), au moins un condensateur (BG₃), au moins une pompe à eau d'alimentation de chaudière (BG₄), au moins un générateur (BG₅) et au moins un épurateur de gaz de fumée (BG₆).

11. Procédé selon la revendication 9 ou 10, **caractérisé en ce que** la chaudière (BG₁) présente les sous-ensembles suivants au moins en partie : alimentation en combustible (1), amenée d'air (2) avec ventilateur, préréchauffeur d'air (3), chaudière à vapeur à haute pression (4), surchauffeur (5) et/ou dispositif d'extraction des cendres (17).

12. Procédé selon l'une des revendications 9 à 11, **caractérisé en ce que** la turbine à vapeur (BG₂) présente les sous-ensembles suivants : partie haute pression (6), surchauffeur intermédiaire (7) et/ou partie basse pression (8).

13. Procédé selon l'une des revendications 9 à 12, **caractérisé en ce que** le condensateur (BG₃) présente les sous-ensembles suivants : pompe à eau de refroidissement (20), tour de refroidissement (18) et/ou pompe à eau supplémentaire (19).

14. Procédé selon l'une des revendications 9 à 13, **caractérisé en ce que** le générateur (BG₅) présente les sous-ensembles suivants : alternateur triphasé (21) et excitatrice par courant continu (22).

15. Procédé selon l'une des revendications 9 à 14, **caractérisé en ce que** l'épurateur de gaz de fumée (BG₆) présente les sous-ensembles suivants : dépoussiéreur de gaz de fumée (15) et/ou ventilateur de gaz de fumée (16).

16. Programme informatique, **caractérisé en ce qu'**il est programmé pour réaliser un procédé selon l'une des revendications 1 à 15.

17. Programme informatique selon la revendication 16, **caractérisé en ce qu'**il peut être sauvegardé sur un support d'enregistrement.
